# EUROPEAN PATENT APPLICATION

(11) **EP 2 818 995 A1**
(43) Date of publication of application: **31.12.2014**
(21) Application number: 13173596.1
(22) Date of filing: 25.06.2013
(51) Int. Cl.: G06F 3/0488

(54) **Improved tactile feedback for touch display**

(71) Applicant: Doro AB, 226 43 Lund (SE)
(72) Inventor: Krokstäde, Calle, Hong Kong (CN)
(74) Representative: Ström & Gulliksson AB

(57) **Abstract**

A keypad (300) comprising: a base layer (516) comprising at least one hole (537a); an interior layer (514) comprising at least one collapsible dome (535a); an intermediate layer (512) comprising at least one hole (532a); and an exterior layer comprising at least one dome (530a-c), wherein the at least one hole (537a) of the base layer (516), the at least one collapsible dome (535a) of the interior layer (514), the at least one hole (532a) of the intermediate layer (512) and the at least one dome (530a-c) of the exterior layer (510) are correspondingly aligned to form at least one key (330) for cooperating with a touch display.

## Description

### TECHNICAL FIELD

This application relates to a keypad, a mobile communications terminal and a method for an improved user interface, and in particular to a keypad, a mobile communications terminal and a method for an improved user interface for providing a tactile feel of a touch display.

### BACKGROUND

Touch display based user interfaces are becoming more and more common on the mobile communications terminal market offering many applications and functions not available on traditional keypad-based interfaces.

They are also commonly easier to use with their look and point style interaction with a user and for these two reasons, and other, they are becoming more and more attractive also to users who are not always technically adept and prone to adopt new technology.

Such users have demonstrated a difficulty in understanding the concept of key input on a touch display as they do not receive any tactile feedback that a key has been pressed. The users are thus uncertain how hard to press and this uncertainty is one obstacle in adopting the new technology.

Another problem with touch-based interfaces is that a user's finger is no longer given any physical guidance and inputting text on a touch display requires more focus from the user to be able to correctly find the wanted key. In key-based user interfaces one or more keys were physically marked to enable a user to find his way using only feel.

To overcome these problems, some solutions for attaching a keypad over a touch display have been proposed. However, these solutions all suffer from a complicated design and the resulting complicated structure increases the cost of the product and the constructions are also prone to breaking.

One solution is proposed in the US patent application US2010328251 which discloses systems for an optically clear keyboard that can be applied to a touch-sensitive display screen, for example, while mitigating distortion of the display. An apparatus for use over a touch-sensitive display screen can comprise a plurality of button structures formed of an optically clear material. The buttons are disposed in an optically clear fluid or gel having an index of refraction equivalent to the index of refraction of the button structures. The apparatus comprises an optically clear elastomeric membrane over the fluid, which forms a sealed barrier for the fluid or gel. The volume within the sealed portion of the apparatus contains the fluid and the button structures.

Such prior art systems that are arranged with gels or liquids and are thus highly dependent on maintaining an intact structure or the keys will become unusable and the touch device carrying the keys will become smeared with the liquid or gel, possibly damaging the touch device.

One solution is provided by the US patent application US2010156245 which discloses a method includes applying a lip, comprised of a first material, along at least a portion of an actuator of an electronic device, and applying a coating, comprised of an elastic material, to cover a part of the actuator, the coating disposed to facilitate actuation of the actuator.

Another solution is provided by the international patent application WO12117046A1 which discloses an input element for operating a touch-screen, said input element comprising an electrically conductive layer which is applied to an electrically nonconductive substrate. The electrically conductive layer is structured and has at least one button, conductor track and/or electrode, wherein at least one electrode and/or conductor track is operatively connected to the touch-screen.

And a third solution is provided by the US patent application US2011139517 which discloses an input device that includes a thin film substrate on which a fixed electrode is formed, and a movable electrode formed of a conductive material, the fixed electrode including a capacitance detection electrode and a connection section, the movable electrode including a displacement section that is disposed to be opposite to the capacitance detection electrode and deformed by a pressing force, and a stationary section that is connected to the connection section, the input device detecting a change in capacitance that occurs when the displacement section has been pressed.

Such prior art solutions suffer from complicated designs.

There is thus a need for a manner of providing a tactile feel of a touch based user interface to a user which is easy to use and which is minimally confusing to a user and which is of simple construction.

### SUMMARY

It is an object of the teachings of this application to overcome the problems listed above by providing an accessory device for touch devices, such as a keypad comprising a base layer comprising at least one hole, an interior layer comprising at least one collapsible dome, an intermediate layer comprising at least one hole, and an exterior layer comprising at least one dome, wherein the at least one hole of the base layer, the at least one collapsible dome of the interior layer, the at least one hole of the intermediate layer and the at least one dome of the exterior layer are correspondingly aligned to form at least one key for cooperating with a touch display.

In one embodiment the keypad is optically clear or transparent, which enables it to be used with a touch display without obstructing any content being displayed on an underlying touch display.

It is also an object of the teachings of this application to overcome the problems listed above by providing a mobile communications terminal comprising a touch display and a keypad according to above mounted on said touch display.

It is also an object of the teachings of this application to overcome the problems listed above by providing a mobile communications terminal comprising a touch display wherein said touch display is arranged with a recess for receiving a keypad according to above to be mounted on said touch display. This enables the keypad to be mounted in line or aligned with the rest of the touch display surface.

It is also an object of the teachings of this application to overcome the problems listed above by providing a method for providing a keypad comprising forming a base layer comprising at least one hole, forming an interior layer comprising at least one collapsible dome, forming an intermediate layer comprising at least one hole and forming an exterior layer comprising at least one dome, pressing together the base layer, the interior layer, the intermediate plate and the exterior layer and correspondingly aligning the at least one hole of the base layer, the at least one collapsible dome of the interior layer, the at least one hole of the intermediate layer and the at least one dome of the exterior layer to form at least one key for cooperating with a touch display.

In one embodiment the method further comprises mounting the keypad on a touch display aligning the keys with positions for content to be displayed.

Such accessory devices exemplified through a keypad as disclosed herein may be produced cheaply as it basically is basically formed of only two layers (possibly plastic), one being arranged with an adhesive surface for attaching to a touch display, and one arranged with collapsible domes. The accessory device herein is further configured with a protective exterior layer and an intermediate plate layer for added support. The accessory device may be removably attached to any touch display thereby enabling it to be used on any touch device, especially mobile communications terminals; also as it may be attached post sale by the user himself. Should the user mount the accessory device incorrectly, it can easily be re aligned or replaced.

The key domes may be designed to enlarge the underlying key which further improves the usability for technically inapt users such as the elderly also commonly suffering from reduced eye sight. The distortion of the underlying displayed content is thus designed to be put into good use through a clever and insightful design.

The inventors of the present invention have realized, after inventive and insightful reasoning, that by utilizing a keypad as disclosed herein, a simple, cost efficient manner of producing and mounting a keypad to provide tactile feedback is achieved. This provides for a very simple solution as an alternative to the solutions proposed by contemporary technologies, i.e. the prior art - and the solution is also superior to the prior art in that it is cheaper and more easy to assemble/mount.

Also, by realizing that such keys can be adopted in mobile communication terminals, tactile feedback can be provided to a user in a cost efficient manner, both construction-wise and assembly-wise and the keypad can easily be mounted, remounted and replaced in a manner that is unavailable in the prior art systems.

Other features and advantages of the disclosed embodiments will appear from the following detailed disclosure as well as from the drawings.

### BRIEF DESCRIPTION OF DRAWINGS

The invention will be described in further detail under reference to the accompanying drawings in which:
Figure 1 shows a schematic view of a general mobile communications terminal arranged to be used with an accessory device, such as a keypad, according to one embodiment of the teachings of this application;
Figure 2 shows a schematic view of the components of a mobile communications terminal as in figure 1;
Figure 3 shows a view of an accessory device, in this example a keypad, according to one embodiment of the teachings of this application;
Figure 4 shows a view of a touch device being arranged with an accessory device such as a keypad, according to one embodiment of the teachings of this application;
Figure 5 shows an exploded perspective view of a keypad according to one embodiment of the teachings herein;
Figure 6 shows an exploded sectional view of a keypad according to one embodiment of the teachings herein;
Figure 7 shows a sectional view of a keypad being arranged in a recess of a touch display according to one embodiment of the teachings herein;
Figure 8 shows an alternative keypad according to one embodiment of the teachings therein; and
Figure 9 shows a flowchart of a method according to one embodiment of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

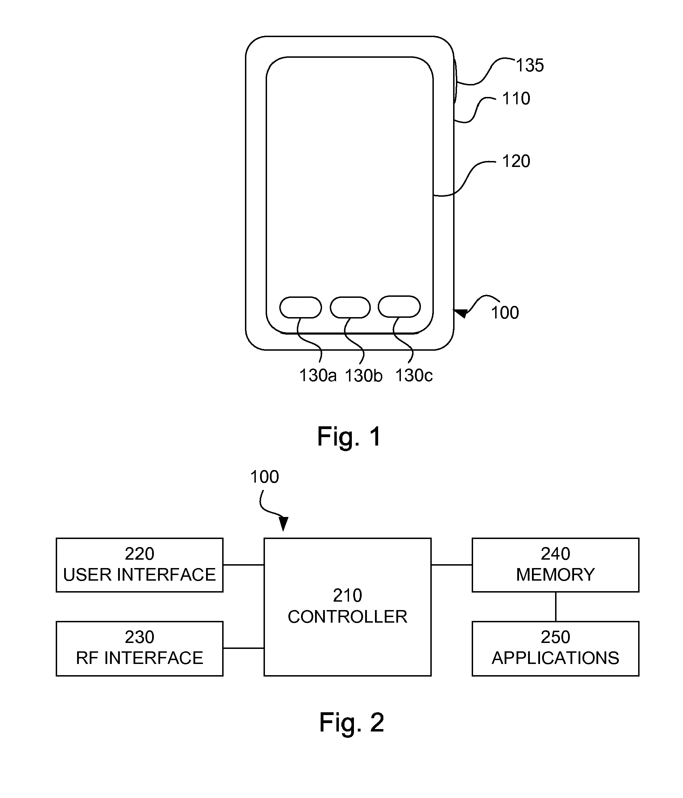

Figure 1 shows an example of a touch device 100. In the example of figure 1 the touch device is a mobile communications terminal 100. The touch device may also be a laptop computer or desktop computer having a touch display, a tablet computer, a game device, a media device, a navigation device or other touch device capable of presenting virtual keys and receiving touch input on said virtual keys. An example of a mobile communications terminal 100 will be described with simultaneous reference to figure 2 which shows a schematic overview of the components of a touch device, such as a mobile communications terminal 100.

The mobile communications terminal 100 comprises a housing 110 housing a touch display 120. The touch display 120 forms part of a user interface 220 and is arranged to display one or more virtual keys or icons 130a-c. The touch display is also arranged for receiving touch input, possibly indicating and activating one of the displayed virtual keys 130a-c. In one embodiment the touch display is arranged to display at least three virtual keys 130a-c being associated with a menu function presenting menu options, a home function for returning to a home screen and return or back function for returning to the previous screen or the next higher level in a user interface hierarchy respectively. Such keys are commonly known in the technical field of mobile communications terminals. One example being the three virtual keys utilized in the Android operating system. Such virtual keys 130a-c may be arranged to always be displayed (at least when the mobile communications terminal is operational) irrespective of the application currently being executed.

The user interface 220 may further comprise one or more hard keys 135 (only one shown in figure 1). The mobile communications terminal 100 also comprises a controller 210, such as one or more central processing units or other processors, which reads instructions stored in a memory 240. The memory may be implemented using any known memory technology, such as Random Access memory, Read-Only Memory, Flash drives or such as is known to a skilled person. The memory may also store one or more applications 250. The applications and the instructions stored in the memory 240 control the operation of the mobile communications terminal 100 when executed by the controller 210. A touch device 100 may also comprise a radio frequency (RF) interface 230 for communication with other devices. The RF interface may be a cellular interface. The RF interface 230 may also be a short range interface such as according to the standards IEEE 802.11, Bluetooth® or ZigBee to mention a few. A combination of a short range and a cellular interface may also be possible and is commonly the case for a mobile communications terminal 100.

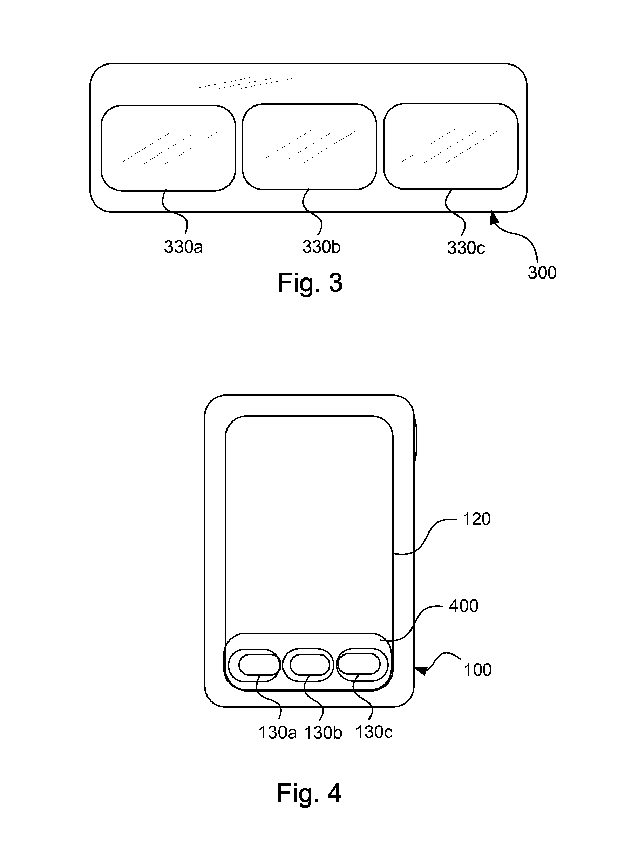

Figure 3 shows an accessory device according 300 to one embodiment of the teachings presented herein. In this embodiment the accessory device is a keypad 300 having three keys 330a-c. In other embodiments the accessory device may be a protective layer or screen providing a magnifying function and a tactile feel for a larger area of a touch display. In one embodiment the keypad 300 is formed of optically clear material(s) making the keypad 300 to be substantially transparent. This enables the keypad 300 to be attached to a touch device, such as the mobile communications terminal 100 of figure 1, without obstructing or blocking any underlying content being displayed on the touch display 120 on which the keypad 300 is attached.

In one embodiment the keypad 300 is made from a non-transparent material. In such an embodiment the keypad 300 may be arranged with descriptive text on any or all of the keys 330a-c indicating the function of the key to a user. This enables the keypad to better convey the function of a key by, for example, using an enlarged key label. It also allows for a simple reconfiguration of the function of the key and conveying this to a user. Also, the labels may be arranged on a keypad 300 being (substantially) transparent for emphasising the function of the corresponding key(s) 330a-c.

It should be noted that even if the keypad 300 is shown as having three keys 330a-c,a keypad 330 may be formed having any number of keys 330, for example 1, 2, 3, 9, 12 or any number. Also any alignment and arrangement of the keys 330 is possible and within the scope of the teaching of this application. In fact, the simple structure of the keypad 300 facilitates such flexibility in designing the keypad 300 and is one of the benefits in utilizing such keypads.

Figure 4 shows a touch device 100, in this example a mobile communications terminal 100, being arranged with an accessory device, in this example a keypad 300. The keypad 300 is designed so that the keys 330a-c substantially overlap the touch keys 130a-c. The keypad 300 can therefore be attached to the touch display 120 so that each key 330a-c is positioned over each virtual key 130a-c respectively. A combined user interface is thus formed for the mobile communications terminal 100 effectively transforming the virtual keys 130a-c to hard keys 330a-c. In an embodiment where the keys 330a-c are transparent, the resulting keys would be able to function as a softkey, i.e. a key whose functions changes and the current function is displayed on a display.

By attaching the keypad 300 on the touch display 120 in an area overlapping virtual keys that are often or always presented (at least when in operation) it is possible to effectively form a keypad 330 emulating the performance of a hard-wired keypad on the touch display 120 and guide a user's fingers to the correct key. As the keypad 300 may be transparent the display function of the touch display 120 is not affected and the touch display 120 may continue to display content even in the portions underlying the keypad 300.

In an embodiment where the keys 330a-c of the keypad 300 are formed as domes, the shape of the dome may be designed so as to enlarge any underlying content. The use of such a keypad 300 thus also brings about the added benefit of enlarging the underlying displayed content so that a user suffering from reduced eyesight, which is common among elderly users, may be able to perceive the function of the virtual key 130a-c more easily. This may also be utilized in other instances where the underlaying displayed content could beneficially be displayed in a larger size.

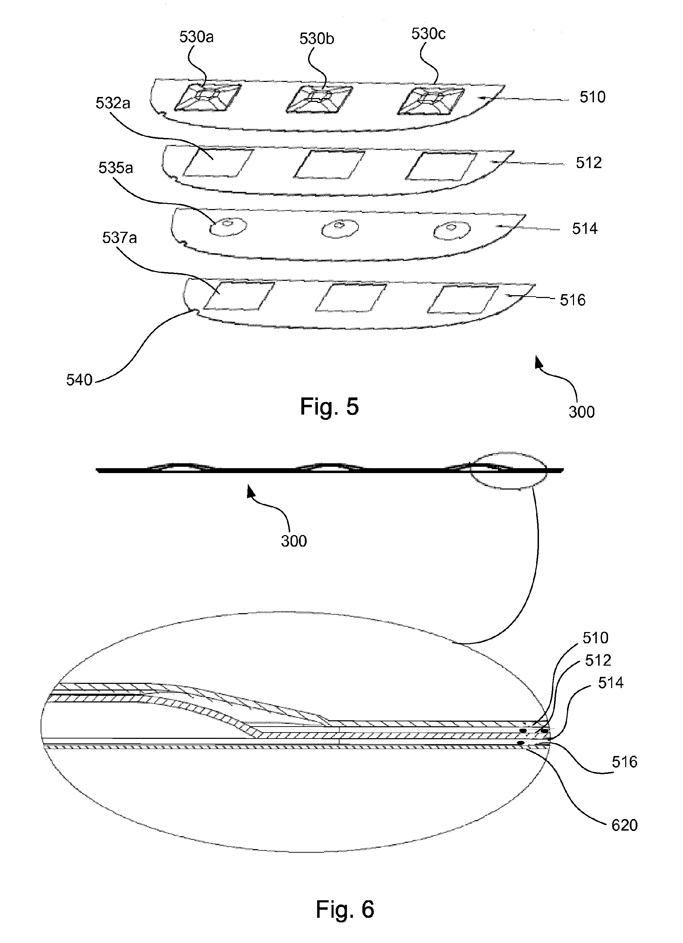

The general structure of a keypad 300 will now be described with simultaneous reference to figures 5 and 6. Figure 5 shows an exploded perspective view of a keypad 300 according to one embodiment of the teachings herein. Figure 6 shows an exploded sectional view of a keypad 300 according to one embodiment of the teachings herein.

As can be seen in figures 5 and 6, the keypad 300 basically consists of two films. One upper film 510 and one lower film 516 (seen from the user's perspective). The lower film 516 is arranged to constitute the base of the keypad 300 and to be attached to a touch display 120 and will hereafter be referred to as the base layer 516. The base layer 516 may be arranged with an adhesive layer 620 for attaching the base layer 516 and thus the keypad 300 to the touch display 120. Alternatively, the base layer 516 may be attached to the touch display 120 in other manners as well, possibly through applying an adhesive substance or in addition to the adhesive layer 620. In one embodiment, where the base layer 516 is formed by a double coated tape, the adhesive layer 620 is included in the double coated tape as one of the coatings.

The upper film 510 is actually comprised of three layers, an exterior layer 510, an intermediate plate layer 512 and an interior layer 514.

The exterior layer 510 is formed as a transparent PET film. The exterior layer may also be hardened to protect against wear and tear. In one embodiment the exterior layer 510 is formed of ultraviolet cured acrylate coating on a polyester film.

The interior layer 514 is also formed as a transparent PET layer such as polyester terephthalate.

The intermediate plate layer 512 may be formed as a double coated film.

The exterior layer 510 and the interior layer 514 are each formed to comprise at least one dome 530a-c and 535a respectively. It should be noted that for clarity purposes only one dome 535a of the interior layer 514 is referenced in the figures, but it should be noted that the other unreferenced domes correspond to the domes 535b-c in the exterior layer 510. The same applies to the holes 532a and 537a of the base layer 516 and the intermediate plate layer 512. The domes 530a-c of the exterior layer 510 and the domes 535a of the interior layer 514 together form the keys 330 of the keypad 300. The keys 330 are designed to be collapsible. In one embodiment the dome 535a of the interior layer 514 is designed to be collapsible and the domes 530a-c of the exterior layer 510 are designed to be flexible so as to follow the movement of the finger as it pushes on the exterior layer 510 and thereby also allowing the pushing movement to translate to the corresponding dome 535a of the interior layer 514 which dome then collapses and pushes on the underlying virtual key 130 of the touch display 120. The intermediate plate layer 512 is arranged between the exterior layer 510 and the interior layer 514 to provide support and also to allow for movement of the respective domes 530a-c and 535a.The intermediate plate layer 512 is arranged with holes 532a positioned to correspond to each a dome 530a-c, 535a of the exterior layer 510 and the interior layer 514. This provides a distance element between the interior layer 514 and the exterior layer 510 which distance element facilitates individual movement of the corresponding domes 530a-c and 535a.

In one embodiment the keypad film resulting from the base layer 516, the interior layer 514, the intermediate plate layer 512 and the exterior layer 510 is 0.45 mm thick and the domes protrude to an additional height of 0.7 mm making the whole keypad 300 being 1.15 mm thick.

The base layer 516 and the intermediate plate layer 512 may be made of Double Coated tape. One example of such a double coated tape is the 3M® High Strength Double Coated Tape with Adhesive 300LSE, 93010LE having a thickness well suited for being used in a keypad such as herein.. When applying the tape, a jig may be used in order to get as much pressure as possible during assembly of the keypad 300.

As a key 530 is subjected to physical force such as when being pressed on by a user's finger, the corresponding dome 535a of the interior layer 514 is deformed into a collapsed state enabling the key to interact with the underlying touch display 120.

In one embodiment the dome 535a of the interior layer is constructed to collapse when being exposed to a pressure of approximately 130 g. The pressure needed may also be any pressure in the range 100-160 g. This enables a user to perceive a tactile feel of a button being pressed without having to push too hard, which could be uncomfortable to a user. The tensile strength required is specified by the material and the thickness of the interior layer. In one embodiment the interior layer 514 is 0.10 mm thick. The thickness of the layer depends on the wanted collapsing pressure and on the material of the interior layer and may therefore vary depending on those factors.

In the collapsed state the user's finger makes indirect contact with the underlying touch display 120 for transferring of achieved pressure for touch displays working with pressure control. For touch displays working by detecting a capacitance, the PET films in the layers and the resulting keypad 300 are thin enough to allow the user's finger to be detected at the touch point through the keypad 300.

The very simple design of the keypad 300 makes it easy to manufacture and assemble. The keypad 300 is also thin enough to convey any touch. This provides a keypad 300 that is highly versatile, easy to manufacture and simple to assemble which enables provision of a tactile feel to a touch device without obscuring the content being displayed on a touch display 120.

As can be seen in figure 5, the shaping of the keypad 300 is highly flexible and the keypad 300 may be formed with different cut outs 540. Such cut outs 540 may be used for aligning the keypad 300 during assembly or for enabling a wide contact surface without blocking some components such as a microphone.

It should be noted that the touch display 120 (and the touch device 100 comprising the touch display) may not be a part of the keypad 300 and they may be provided as separate devices. By providing the keypad 300 as a separate device, as opposed to or in addition to providing the keypad as integrated with the touch display 120, it is easy to replace the keypad should it become worn. It is also possible to allow a user to customize his device selecting the keypads 300 he desires, with regards to aesthetic appearance or key layout representing a functionality. A keypad 300 may also be used to replace the functionality of a function or better emphasize it. For example, if a user solely or mostly uses his mobile communications terminal for a particular purpose, a keypad designed for that purpose (key shapes or key labels) may be used to emphasize or facilitate such use.

As the key domes 535a have a tensile strength and will only collapse when a specific pressure has been applied, the user will get the feeling of actually pressing on something and as the dome collapses the user will get a tactile feel of when the pressure of the touch has been adequate for providing a successful touch action.

Technically inapt users will thus understand more easily how the touch input works and how hard and long to push.

Furthermore, since the domes are convex by their nature, they may be shaped to enlarge any underlying displayed content. This enables the keypad to work as a magnifier improving the understanding of the underlying displayed content with persons suffering from reduced eyesight. By realizing that the convex shape of a dome can be used to do good for persons suffering from reduced eyesight a further benefit of using a keypad 300 as herein is achieved. Some examples of other instances when it may be useful to enlarge the underlying content is for navigation devices that are to be used in moving vehicles and communication devices for professional drivers.

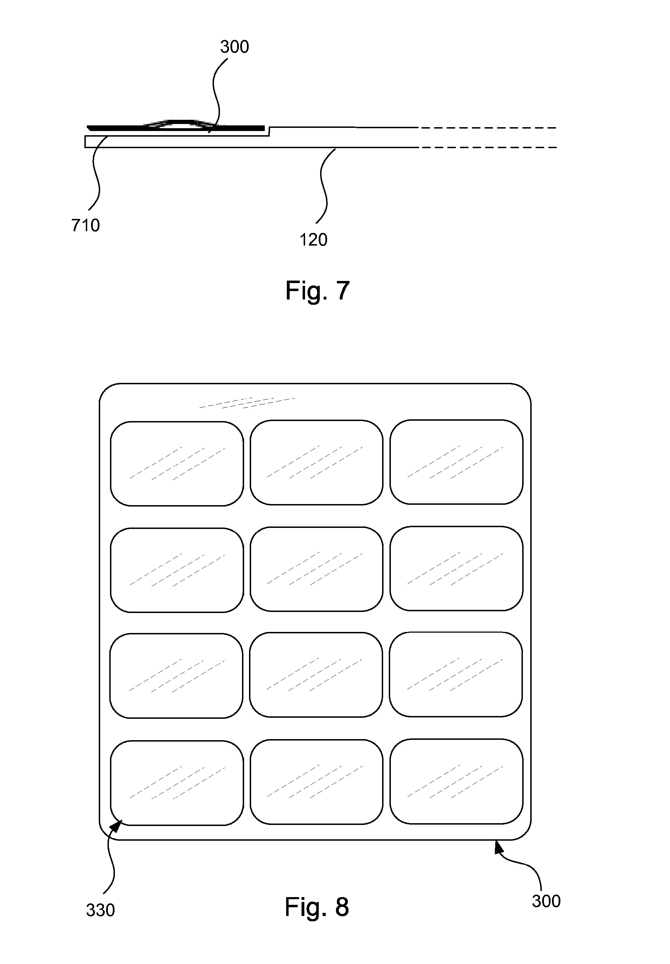

Figure 7 shows an alternative arrangement of a keypad 300 on a touch display 120 of a touch device 100, such as a mobile communications terminal 100. A portion of the surface of the touch display 120 has been chamfered to provide a recess 710 arranged to receive the keypad 300. The recess 710 may also be formed in other ways, for example through molded glass or plastic displays being molded to incorporate the recess. A recess 710 may also be formed effectively by arranging a screen protector on the touch display, which screen protector does not cover the whole display 120. If the screen protector has the same thickness as the keypad's basic layer, the keypad 300 may be arranged in the area not covered by the screen protector.

By chamfering away a portion to provide a recess for receiving the keypad, an inventive manner of integrating the keypad 300 in a touch display 120 is achieved. Using precision tools and care when attaching the keypad 300, the keypad 300 may even be attached seamlessly and thus forming an integral part of the touch display. The attachment may be made during manufacture or assembly of the mobile communications terminal 100 or by a user post sale. A keypad 300 attached in a recess is additionally protected against wear and tear, especially the edges of the keypad 300 are protected and the keypad 300 will thus run a smaller risk of being (partially) torn off. Should the keypad 300 be torn off or come loose, it can easily be replaced with a new keypad 300 by simply aligning the replacement and attaching it.

Figure 8 shows an alternative keypad 300 having a different key arrangement 330. In this configuration the keypad 300 has 12 keys 330 for being used on a (virtual) ITU-T keypad. Other variations are also possible, for example different variations for being used with QWERTY or AZERTY keyboards - or variations thereof.

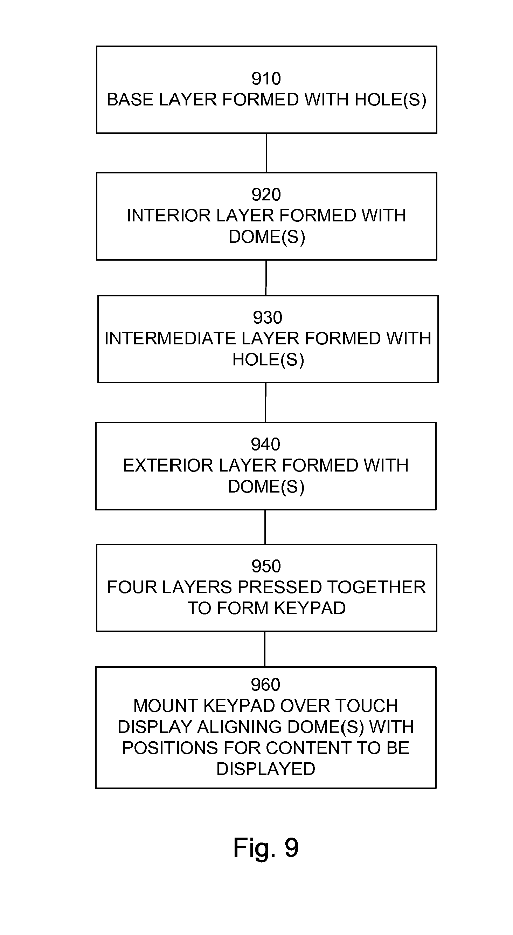

Figure 9 shows a flowchart of a method according to one embodiment of the teachings herein where a base layer is formed 910 by a plate such as a double coated tape for providing support to an interior layer, formed 920 of a PET film having collapsible domes that are aligned with holes in the base layer. A further intermediate plate layer is formed 930 also having holes corresponding to the holes in the base layer and for providing support and an exterior layer is formed 940 of a PET film also having domes corresponding to the domes of the interior layer and the base layer and the intermediate film. The four films or layers are pressed together 950 so that they may bond through an adhesive coating on the base layer and on the intermediate plate layer thereby providing a transparent keypad to be used with a touch device. The keypad is then mounted on a touch display, aligning the domes with content to be displayed on the touch display. It should be noted that in some embodiments the content to be displayed may also be displayed - additionally or alternatively, on the keypad. This enables for a hard key keypad to be manufactured cheaply and used on a touch device, utilizing the touch display and the touch input to provide for a highly flexible platform for which keypads may easily be manufactured for. A new device may thus efficiently be provided by a simple reprogramming of a touch device and providing a new keypad - without having to change the physical design or construction of the touch device.

One benefit of the teachings herein is that the keypad is cheap to manufacture and easy to assemble. Another benefit is that the keypad 300 is easily mounted on a device and may also be replaced easily. A further benefit is that the domes may be shaped to enlarge the underlying displayed content thus enabling a user to more easily see the symbols presented and understand the function associated with a virtual key.

Another benefit is that the keypad 300 is constructed through four films irrespective of the number of keys or the arrangement of the keys. No additional loose parts are needed that require careful mounting as in the prior art. This enables a much simpler assembly and mounting of the keypad.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A keypad (300) comprising:
a base layer (516) comprising at least one hole (537a);
an interior layer (514) comprising at least one collapsible dome (535a);
an intermediate layer (512) comprising at least one hole (532a); and
an exterior layer (510) comprising at least one dome (530a-c), wherein the at least one hole (537a) of the base layer (516), the at least one collapsible dome (535a) of the interior layer (514), the at least one hole (532a) of the intermediate layer (512) and the at least one dome (530a-c) of the exterior layer (510) are correspondingly aligned to form at least one key (330) for cooperating with a touch display.

2. The keypad (300) according to claim 1, wherein said base layer (516) and said intermediate plate layer (512) are each comprised of a double coated tape.

3. The keypad (300) according to claim 2, wherein said double coated tape is applied with an adhesive for mounting said interior layer(512) and said exterior layer (510) to said base layer (516) and said intermediate layer (514).

4. The keypad (300) according to any of claims 1-3, wherein said interior layer (514) is formed by a transparent PET layer.

5. The keypad (300) according to claim 4, wherein said interior layer (514) is formed by a polyester terephtalate film.

6. The keypad (300) according to any of claims 1-5, wherein said exterior layer (510) is formed by a transparent PET film.

7. The keypad (300) according to claim 6, wherein said exterior layer (510) is formed by a polyester film having an ultraviolet cured acrylate coating.

8. The keypad (300) according to any of claims 1-7, wherein said keypad (300) is transparent.

9. The keypad (300) according to claim 8, wherein said key (330) is shaped to magnify any underlying content.

10. A mobile communications terminal (100) comprising a touch display (120) and a keypad according to any of claims 1 to 9 mounted on said touch display (120).

11. The mobile communications terminal (100) of claim 10, wherein said touch display (120) is arranged with a recess (710) in which the keypad (300) is mounted.

12. A mobile communications terminal (100) comprising a touch display (120) wherein said touch display (120) is arranged with a recess (710) for receiving a keypad (300) according to any of claims 1 to 9 to be mounted on said touch display (120).

13. A method for providing a keypad (300) comprising
forming a base layer (516) comprising at least one hole (537a);
forming an interior layer (514) comprising at least one collapsible dome (535a);
forming an intermediate layer (512) comprising at least one hole (532a); forming an exterior layer comprising at least one dome (530a-c); and
pressing together the base layer (516), the interior layer (514), the intermediate plate (512) and the exterior layer (510) and correspondingly aligning the at least one hole (537a) of the base layer (516), the at least one collapsible dome (535a) of the interior layer (514), the at least one hole (532a) of the intermediate layer (512) and the at least one dome (530a-c) of the exterior layer (510) to form at least one key (330) for cooperating with a touch display.

14. The method of claim 13 further comprising mounting the keypad (300) on a touch display (120) aligning the keys (330) with positions for content to be displayed.
